# FASCICULE DE BREVET EUROPEEN

(11) **EP 2 279 085 B1**
(45) Date de publication et mention de la délivrance du brevet: **21.03.2012**
(21) Numéro de dépôt: 09731349.8
(22) Date de dépôt: 09.04.2009
(51) Int. Cl.: B60C 1/00, C08K 3/00, C08K 3/04, C08L 7/00, C08L 21/00, C08K 7/24

(54) **PNEUMATIQUE AYANT UNE GOMME DE BORDURE DE NAPPE FAIBLEMENT HYSTERETIQUE**
REIFEN MIT LAGENRANDMANTEL MIT GERINGER HYSTERESE
TYRE HAVING A PLY BORDER LINER WITH LOW HYSTERESIS

(30) Priorité: 11.04.2008 FR 0852450
(43) Date de publication de la demande: 02.02.2011
(73) Titulaire: Société de Technologie MICHELIN, 63000 Clermont-Ferrand (FR); MICHELIN Recherche et Technique S.A., 1763 Granges-Paccot (CH)
(72) Inventeur: TEISSEYRE, Serge, F-63100 Clermont-Ferrand (FR)
(74) Mandataire: Cohen, Sylvia
(86) Numéro de dépôt international: PCT/EP2009/054317
(87) Numéro de publication internationale: WO 2009/125001

(56) Documents cités:
- EP-A- 1 207 054
- EP-A- 1 707 402
- EP-A- 1 710 274
- EP-A- 1 780 238
- DE-A1- 1 755 301
- US-A- 4 362 200
- US-A1- 2002 177 650
- US-A1- 2003 191 249

## Description

La présente invention concerne un pneumatique à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

L'armature de carcasse est ancrée de part et d'autre à au moins une tringle de bourrelet et est surmontée radialement par une armature de sommet constituée d'au moins deux nappes dites de travail, superposées et formées de fils ou câbles parallèles dans chaque nappe et croisés d'une nappe à la suivante en faisant avec la direction circonférentielle du pneumatique des angles au plus égaux à 45° en valeur absolue. Elle comprend aussi généralement une nappe de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail. La nappe de triangulation forme avec les deux nappes de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des renforcements dans la zone du sommet du pneumatique.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre; par contre l'endurance de ce dernier et en particulier de l'armature de sommet est fortement pénalisée.

Les contraintes existantes au niveau de l'armature de sommet et plus particulièrement les contraintes de cisaillement entre les deux nappes de sommet de travail, alliées à une élévation non négligeable de la température de fonctionnement au niveau des extrémités de la nappe de travail la plus courte, ont pour conséquence une dégradation de l'endurance du pneumatique, et ceci malgré la présence à la jonction des bords de nappes de sommet de travail d'une couche de caoutchouc épaissie. Le même problème existe dans le cas de bords de deux nappes à éléments de renforcement, croisés d'une nappe à l'autre nappe, ladite autre nappe n'étant pas obligatoirement radialement adjacente à la première.

Afin de remédier aux inconvénients ci-dessus et d'améliorer l'endurance de l'armature de sommet du type de pneumatique étudié, un certain nombre de brevets antérieurs revendique des solutions relatives à la structure et qualité des couches et/ou profilés de mélanges caoutchouteux qui sont disposés au contact des extrémités de nappes de travail.

Cependant il reste difficile pour ces gommes ou profilés disposés au contact des extrémités des nappes , d'atteindre un compromis pour obtenir à la fois un niveau de rigidité équivalent et une hystérèse améliorée donc diminuée qui permet de limiter l'échauffement les extrémités de nappe.

La demanderesse a découvert de façon surprenante que l'utilisation de graphite dans une composition de caoutchouc destinée à des gommes en contact avec une extrémité de nappe intérieure de pneumatique, dans une proportion liée à celle de la charge renforçante permettait précisément de réaliser un tel compromis.

L'invention concerne également des gommes en contact avec une extrémité d'un élément de renforcement constitutif de l'armature de carcasse. De tels éléments de renforcement peuvent être tout type d'éléments de renforcement sous forme filaire, susceptible de renforcer une matrice déterminée, par exemple une matrice de caoutchouc. A titre d'éléments de renforcement, on citera par exemple des fibres multifilamentaires (« multifilament yarns »), ces fibres pouvant être tordues ou non sur elles-mêmes, des fils unitaires tels que des monofils cylindriques ou oblongs, avec ou sans torsion sur eux-mêmes, des câblés ou des retors (« cords ») obtenus par des opérations de câblage ou retordage de ces fils unitaires ou de ces fibres, de tels éléments de renforcement pouvant être hybrides, c'est-à-dire composites, comportant des éléments de natures différentes. On entend par « retors » (« plied yarn » ou « folded yarn ») un élément de renforcement constitué par deux brins (« single yarns ») ou plus assemblés ensemble par des opérations de retordage ; ces brins, généralement formés de fibres multifilamentaires, sont d'abord retordus individuellement dans un sens (direction de torsion S ou Z) au cours d'une première étape de retordage, puis tordus ensemble en sens inverse (direction de torsion Z ou S, respectivement) au cours d'une seconde étape de retordage.

Dans ce qui suit on désignera par « gomme de bordure », un mélange caoutchouteux positionné dans le pneumatique directement au contact de l'extrémité d'une nappe de renforcement ou de l'extrémité d'un élément de renforcement.

Par extension de cette définition, on désignera également par « gomme de bordure », un mélange caoutchouteux positionné dans le pneumatique au contact d'une première gomme de bordure telle que définie dans le paragraphe précédent, cette première gomme de bordure ayant une épaisseur inférieure ou égale à 2 mm, de préférence inférieure ou égale à 1,5 mm.

L'invention concerne un pneumatique comportant au moins une gomme de bordure d'une extrémité de nappe ou d'élément de renforcement, ayant une composition à base d'au moins un élastomère diénique, une charge renforçante et un système de vulcanisation caractérisé en ce que la composition comprend également du graphite, de sorte que :
le taux de charge renforçante est égal à (A-X) pce et le taux de graphite est compris entre X/6 et 2X/3 pce,
   - A étant un nombre compris entre 20 et 120,
   - X étant un nombre compris entre 4 et 48,
   - et X et A vérifiant la relation suivante : X< 0.4 * A.

Notamment, la composition de la gomme de bordure comprend du graphite dans un taux compris entre 2 et 30 pce, de préférence entre. 3 et 20 pce.

Selon un mode de réalisation particulier de l'invention, le taux de graphite est égal à X/2. Selon un autre mode de réalisation, le taux de graphite est égal à X/6.

Selon un variante de réalisation de l'invention, l'élastomère diénique est choisi dans le groupe constitué par les polybutadiènes, le caoutchouc naturel, les polyisoprènes de synthèse, les copolymères de butadiène, les copolymères d'isoprène et les mélanges de Plus particulièrement l'élastomère diénique est un élastomère isoprénique, de préférence un polyisoprène de synthèse ou du caoutchouc naturel.

Avantageusement l'élastomère diénique comprend plus de 40 pce de caoutchouc naturel et/ou de polyisoprène de synthèse.

Selon l'invention, le graphite se présente sous une forme lamellaire.
En particulier, le graphite est un graphite naturel, un graphite naturel expansable. un graphite expansé ou un graphite synthétique, ou le graphite comprend un coupage de ces différents graphites.

Selon une caractéristique de l'invention, la charge renforçante comprend du noir de carbone, de préférence majoritairement du noir de carbone et plus préférentiellement encore la charge renforçante est constituée par du noir de carbone.

Selon une autre caractéristiques de l'invention, la charge renforçante comprend une charge inorganique et notamment de la silice.

L'invention a encore pour objet un procédé pour préparer une gomme de bordure d'une extrémité de nappe ou d'élément de renforcement d'un pneumatique, ayant une composition à base d'au moins un élastomère diénique, une charge renforçante, et un système de vulcanisation caractérisé en ce que la composition comprend également du graphite, de sorte que :
le taux de charge renforçante est égal à (A-X) pce et le taux de graphite est compris entre X/6 et 2X/3 pce,
   - A étant un nombre compris entre 20 et 120,
   - X étant un nombre compris entre 4 et 48,
   - et X et A vérifiant la relation suivante : X< 0.4 * A,
ledit procédé comportant les étapes suivantes :
   - incorporer à un élastomère diénique au moins une charge renforçante, en malaxant thermomécaniquement le tout, en une ou plusieurs fois, jusqu'à atteindre une température maximale comprise entre 110°C et 190°C ;
   - refroidir l'ensemble à une température inférieure à 100°C ;
   - incorporer ensuite le système de vulcanisation ;
   - malaxer le tout jusqu'à une température maximale inférieure à 110°C.

### I. - MESURES ET TESTS

Les compositions de caoutchouc sont caractérisées, avant et après cuisson, comme indiqué ci-après.

### I-1. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

### I-2. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants dits "nominaux" (ou contraintes apparentes, en MPa) à 10% d'allongement (noté "MA10") et 100% d'allongement ("MA100"). Toutes ces mesures de traction sont effectuées dans les conditions normales de température (23±2°C) et d'hygrométrie (50±5% d'humidité relative), selon la norme française NF T 40-101 (décembre 1979). On mesure également les contraintes à la rupture (en MPa) et les allongements à la rupture (en %), à une température de 23°C.

### 1-3 Pertes hystérétiques:

Ces pertes, notées P60°, sont mesurées à 60°C en pourcentage. La déformation pour les pertes mesurées est de 35%.

### II. DESCRIPTION DETAILLEE DE L'INVENTION

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II-1. Elastomère diénique

Par élastomère ou caoutchouc "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a)- tout homopolymère obtenu par polymérisation d'un monomère diène conjugué ayant de 4 à 12 atomes de carbone;
(b)- tout copolymère obtenu par copolymérisation d'un ou plusieurs diènes conjugués entre eux ou avec un ou plusieurs composés vinyle aromatique ayant de 8 à 20 atomes de carbone;
(c)- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d)- un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

En résumé, l'élastomère diénique de la composition conforme à l'invention est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement (par exemple pour véhicules industriels), de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme intérieure étanche de pneumatique sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II-2. Charge renforçante

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices « Ultrasil 7000 » et « Ultrasil 7005 » de la société Degussa, les silices « Zeosil 1165M », « Zeosil1135MP » et « Zeosil 1115MP » de la société Rhodia, la silice « Hi-Sil EZ150G » de la société PPG, les silices « Zeopol 8715 », « Zeopol 8745 » et « Zeopol 8755 » de la Société Huber, les silices à haute surface spécifique telles que décrites dans la demande WO 03/16837.

Lorsque les compositions de l'invention sont destinées à des bandes de roulement de pneumatique à faible résistance au roulement, la charge inorganique renforçante utilisée, en particulier s'il s'agit de silice, a de préférence une surface BET comprise entre 45 et 400 m²/g, plus préférentiellement comprise entre 60 et 300 m²/g.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:
(III) Z - A - Sₓ - A - Z , dans laquelle:
   - x est un entier de 2 à 8 (de préférence de 2 à 5) ;
   - A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
   - Z répond à l'une des formules ci-après: 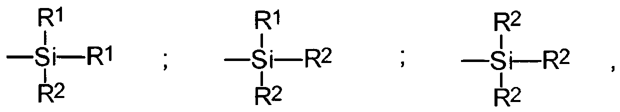 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. Pour une utilisation de la composition en tant que gomme de bordure, on utilise préférentiellement à titre de charge renforçante du noir de carbone dans une proportion supérieure à 20 pce. De préférence le taux de noir de carbone est compris entre 20 et 120 pce, et encore plus préférentiellement entre 20 et 70. Il est clair que des noirs de carbone de grade ASTM très élevé, tel que le noir de carbone N990, sont moins renforçants que des noirs de carbone de grade 700, et à fortiori 600, et qu'il est nécessaire pour un renforcement identique d'utiliser des taux plus importants de noir de carbone s'il s'agit de noirs de carbone de grade 900 que s'il s'agit de noirs de grade 600 ou 700.

Le noir de carbone peut avantageusement constituer la seule charge renforçante ou la charge renforçante majoritaire. Bien entendu on peut utiliser un seul noir de carbone ou un coupage de plusieurs noirs de carbone de grades ASTM différents.

Le noir de carbone peut être également utilisé en coupage avec d'autres charges renforçantes et en particulier des charges inorganiques renforçantes telles que décrites précédemment, et en particulier de la silice.

### II-3 Charge de type graphite

Par graphite, on entend de manière générale un ensemble de feuillets hexagonaux non compacts d'atomes de carbone : les graphènes. Le graphite, système cristallin hexagonal, présente un empilement de type ABAB où le plan B est translaté par rapport au plan A.

Le graphite ne peut pas être considéré comme une charge renforçante au sens de la définition précisée dans le paragraphe II-2, cependant il peut être considéré comme une charge semi-renforçante dans la mesure où il permet une augmentation du module en traction d'une composition de caoutchouc dans laquelle il est incorporé.

Ces définitions étant données, on entend plus particulièrement par graphite susceptible d'être utilisé dans les compositions conformes à l'invention :
- (a) tout graphite naturel, associé aux roches affectées par le métamorphisme, après séparation des impuretés accompagnant les veines de graphite et après broyage;
- (b) tout graphite naturel expansable thermiquement, i.e. dans lequel est intercalé un ou plusieurs composés chimiques à l'état liquide, par exemple un acide, entre ses plans de graphène;
- (c) tout graphite naturel expansé, ce dernier étant réalisé en deux temps : intercalation d'un ou plusieurs composés chimiques à l'état liquide, par exemple un acide, entre les plans de graphène d'un graphite naturel par traitement chimique et expansion à haute température ;
- (d) tout graphite synthétique obtenu par graphitisation de coke de pétrole.

Les compositions de l'invention peuvent contenir un seul graphite ou un mélange de plusieurs graphites, ainsi on peut avoir un coupage de graphite naturel et/ou de graphite expansé et/ou de graphite synthétique.

Le graphite tel que défini précédemment, peut se présenter sur un plan morphologique sous une forme lamellaire ou non.

On a constaté de façon surprenante que les graphites avec n'importe lequel de ces deux types de morphologie convenaient dans les compositions conformes à l'invention, cependant les graphites présentant une forme lamellaire conviennent particulièrement bien.

Le taux de charge renforçante est égal à (A-X) pce et le taux de graphite est compris entre X/6 et 2X/3 pce,
- A étant un nombre compris entre 20 et 120
- X étant un nombre compris entre 4 et 48,
- et X et A vérifiant la relation suivante : X< 0.4 * A.

Lorsque l'on utilise du noir de carbone à titre de charge renforçante majoritaire, on a constaté qu'un taux de graphite égal à X/2 était particulièrement intéressant avec des noirs de carbone de grade de 100 à 300 et qu'un taux de graphite égal à X/6 s'avérait particulièrement avantageux avec des noirs de carbone de grade plus élevé, tel que des grades 600.

Le graphite est présent de préférence dans la composition conforme à l'invention dans des taux allant de 2 pce à 30 pce, et plus préférentiellement de 3 à 20 pce.

### II-4. Additifs divers

Les compositions de caoutchouc conformes à l'invention peuvent comporter également tout ou partie des additifs usuels habituellement utilisés dans les compositions d'élastomères destinées à la fabrication de pneumatiques ou produits semi-finis pour pneumatiques, comme par exemple d'autres plastifiants (autres que le système plastifiant de l'invention), de préférence non aromatiques ou très faiblement aromatiques, par exemple des huiles naphténiques, paraffiniques, des huiles MES ou TDAE, des esters (en particulier trioléates) de glycérol notamment des esters naturels tels que huiles végétales de colza ou de tournesol, des pigments, des agents de protection tels que agents anti-ozonants, anti-oxydants, des agents anti-fatigue, un système de réticulation à base soit de soufre, soit de donneurs de soufre et/ou de peroxyde et/ou de bismaléimides, des accélérateurs de vulcanisation, des activateurs de vulcanisation, des agents anti-réversion.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur processabilité à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II-5. Fabrication des compositions de caoutchouc

Les compositions sont fabriquées dans des mélangeurs appropriés, en utilisant deux phases de préparation successives bien connues de l'homme du métier : une première phase de travail ou malaxage thermomécanique à haute température, jusqu'à une température maximale comprise entre 110°C et 190°C, de préférence entre 130°C et 180°C, suivie d'une seconde phase de travail mécanique jusqu'à une plus basse température, typiquement inférieure à 110°C, par exemple entre 40°C et 100°C, phase de finition au cours de laquelle est incorporé le système de réticulation.

Le procédé conforme à l'invention pour préparer une composition de caoutchouc pour gomme intérieure de pneumatique, comporte les étapes suivantes :
- incorporer à un élastomère, au cours d'une première étape, au moins une charge renforçante, du graphite en malaxant thermomécaniquement le tout, en une ou plusieurs fois, jusqu'à atteindre une température maximale comprise entre 110°C et 190°C ;
- incorporer ensuite, au cours d'une seconde étape, un système de réticulation ;
- malaxer le tout jusqu'à une température maximale inférieure à 110°C.

Ces deux étapes peuvent être réalisées de manière consécutive sur un même mélangeur ou être séparée par une étape de refroidissement à une température inférieure à 100°C, la dernière étape étant alors réalisée sur un deuxième mélangeur.

A titre d'exemple, la première phase est conduite en une seule étape thermomécanique au cours de laquelle on introduit, dans un mélangeur approprié tel qu'un mélangeur interne usuel, dans un premier temps tous les constituants de base nécessaires (élastomère, charge renforçante et agent de couplage si nécessaire et graphite), puis dans un deuxième temps, par exemple après une à deux minutes de malaxage, les autres additifs, éventuels agents de recouvrement ou de mise en oeuvre complémentaires, à l'exception du système de réticulation. Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé pendant quelques minutes, par exemple entre 2 et 15 min.

Le système de réticulation est préférentiellement un système de vulcanisation à base de soufre et d'un accélérateur. On peut utiliser tout composé susceptible d'agir comme accélérateur de vulcanisation des élastomères en présence de soufre, en particulier ceux choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés. De préférence, on utilise un accélérateur primaire du type sulfénamide.

A ce système de vulcanisation viennent s'ajouter, incorporés au cours de la première phase et/ou au cours de la deuxième phase, divers accélérateurs secondaires ou activateurs de vulcanisation connus tels que oxyde de zinc, acide stéarique, dérivés guanidiques (en particulier diphénylguanidine), etc.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme gomme de bordure de pneumatique.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les compositions de caoutchouc précédemment décrites tant à l'état dit "cru" (i.e. avant cuisson) qu'à l'état dit "cuit" ou vulcanisé (i.e. après vulcanisation).

### III- EXEMPLES DE REALISATION DE L'INVENTION

Les exemples qui suivent permettent d'illustrer l'invention, cette dernière ne saurait cependant être limitée à ces seuls exemples.

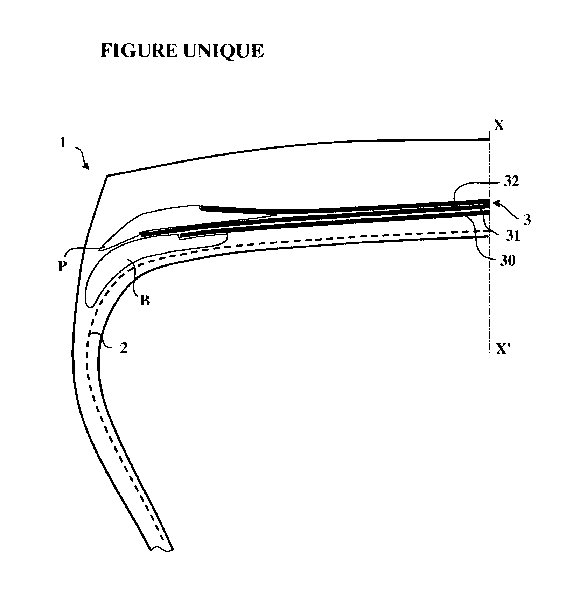

L'exemple de réalisation illustrée par la figure unique, représente deux exemples de gommes de bordure d'extrémité de nappes de travail P et B d'un pneumatique ; la figure unique étant une vue partielle en section méridienne d'un schéma d'un pneumatique.

### III-1 Positionnement des gommes de bordure B et P dans le pneumatique.

La figure ne représente qu'une demi-vue d'un pneumatique qui se prolonge de manière symétrique par rapport à l'axe XX' qui représente le plan médian circonférentiel, ou plan équatorial, d'un pneumatique.

Le pneumatique 1 comprend une armature de carcasse radiale composée d'une seule nappe 2 de câbles métalliques inextensibles, c'est-à-dire des câbles présentant sous une force de traction égale à 10% de la force de rupture un allongement au plus égal à 0,2%. Ladite armature de carcasse est ancrée dans chaque bourrelet ; lesdits bourrelets ne sont pas représentés sur la figure. Elle est radialement à l'extérieur surmontée d'une armature de sommet 3 comprenant radialement de l'intérieur à l'extérieur :
- une première nappe de sommet 30 dite de triangulation et formée de câbles métalliques inextensibles en acier, l'extrémité de cette première nappe recouvre une gomme de bordure B qui s'étend en partie parallèlement à la nappe 2,
- surmontant radialement ladite nappe 30, une première nappe de sommet de travail 31, formée de câbles métalliques inextensibles en acier,
- radialement à l'extérieur et au contact de la nappe de sommet de travail 31, une deuxième gomme de bordure P, dite gomme de découplage, recouvrant l'extrémité de ladite nappe de travail 31,
- puis une deuxième nappe de sommet de travail 32 formée de câbles métalliques identiques à ceux de la première nappe 31.

### III-2 Préparation des compositions de caoutchouc des gommes de bordure B et P

On procède pour les essais de la manière suivante : on introduit dans un mélangeur interne, rempli à 75% et dont la température initiale de cuve est d'environ 60°C, successivement la charge renforçante, le graphite, l'élastomère diénique ainsi que divers autres ingrédients éventuels à l'exception du système de vulcanisation. On conduit alors un travail thermomécanique en une étape, qui dure au total environ 3 à 4 minutes, jusqu'à atteindre une température maximale de « tombée » de 160°C.

On récupère le mélange ainsi obtenu, on le refroidit puis on incorpore du soufre et un accélérateur type sulfénamide sur un mélangeur externe (homo-finisseur) à 30°C, en mélangeant le tout pendant un temps approprié (par exemple entre 5 et 12 min).

Les compositions ainsi obtenues sont ensuite cxtrudées sous forme d'un profilé de caoutchouc de pneumatique.

### III-3 Tests de caoutchouterie

Cet essai a pour objet de montrer l'amélioration du compromis iso rigidité et hystérèse améliorée pour des gommes de bordure B et P telles que décrites précédemment selon l'invention, c'est-à-dire dont la composition contient du graphite et du noir de carbone dans un taux relatif correspondant aux équations citées dans la présente demande de brevet, par rapport à des gommes de bordures témoin contenant uniquement du noir de carbone.

### Essai 1

On notera B1 et P1 les compositions de gommes de bordure témoins et B2 et P2 les gommes de bordure conformes à l'invention, les références B et P correspondant aux indications données dans le paragraphe III-1.

Ces quatre compositions B1, P1, B2 et P2 ont été préparées conformément au procédé détaillé dans le paragraphe précédent ; les compositions B1 et B2 d'une part et P1 et P2 d'autre part ont respectivement la même formulation de base b d'une part, et p d'autre part qui sont les suivantes (les quantités sont exprimées en pce, parties en poids pour cent parties d'élastomère):

| Formulation | b | p |
|---|---|---|
| Elastomère (1) | 100 | 100 |
| Oxyde de zinc | 5 | 9 |
| Acide stéarique | 0,5 | 0,6 |
| Antioxydant (2) | 1,5 | 1,8 |
| DPG (3) | 0,35 | - |
| CTP (4) | - | 0,4 |
| Accélérateur (5) | 0,5 | 0,7 |
| Soufre | 2 | 6 |

| | | |
|---|---|---|
| (1) caoutchouc naturel (2) Antioxydant : 6PPD (3) DPG : diphénylguanidine (4) CTP : cyclohexyl- thio-phthalimide (5) N-ter-butyl-2-benzothiazyle sulfénamide, TBBS, | | |

Les différences de formulation des compositions B1, B2, P1 et P2 sont présentées dans le tableau 1 qui suit :

**Tableau 1**

| **Composition** | **B1** | **B2** | **P1** | **P2** |
|---|---|---|---|---|
| Noir de carbone (6) | 25 | 20 | - | - |
| Noir de carbone (7) | - | - | 50 | 35 |
| Graphite (8) | - | 2,5 | - | 7 |

| | | | | |
|---|---|---|---|---|
| (6) noir de carbone N 115 (7) noir de carbone N347 (8) Graphite naturel « TIMREX BNB90 » commercialisé par la société TIMCAL. | | | | |

Les propriétés de caoutchouterie de ces quatre compositions sont mesurées avant cuisson et après cuisson à 150°C pendant 60 minutes, les résultats obtenus sont portés sur le tableau 2.

**Tableau 2**

| **Composition N°** | **B1** | **B2** | **P1** | **P2** |
|---|---|---|---|---|
| Propriétés avant cuisson | | | | |
| Mooney | 73 | 65 | 72 | 54 |
| Propriétés après cuisson | | | | |
| MA10 (MPa) | 2,43 | 2,73 | 9,40 | 8,99 |
| MA100 (MPa) | 1,02 | 1,32 | 4,30 | 3,80 |
| P60° | 16,9 | 12,3 | 26,2 | 21,6 |

On constate que les compositions B2 et P2 conformes à l'invention, c'est-à-dire contenant du graphite dans une proportion reliée à la proportion de noir de carbone (comme explicitée plus en détails précédemment dans la description), présente une meilleure processabilité que les compositions témoins correspondantes, des propriétés d'allongement à cuit équivalentes et surtout de façon étonnante une baisse significative de l'hystérèse (voir P60°).

Ainsi il apparaît clairement que les compositions conformes à l'invention permettent d'améliorer l'hystérèse par rapport à des compositions témoins, et du fait de leur positionnement en extrémité de nappe ou d'éléments de renforcement, ces compositions conformes à l'invention permettent de limiter l'échauffement au niveau de ces extrémités.

### Essai 2

Dans cet essai, on compare des gommes de bordure de découplage P, telles qu'elles sont décrites dans le paragraphe III-1, dont la formulation comprend un noir de carbone de grade 600.

Les compositions P'1 d'une gomme de bordure témoin et P'2 la gomme de bordure témoin P'1 ont été préparées conformément au procédé détaillé dans le paragraphe III-2; les compositions de P'1 et P'2 ont la même formulation de base p' suivante (les quantités sont exprimées en pce, parties en poids pour cent parties d'élastomère):

| Formulation | p' |
|---|---|
| Elastomère (1) | 100 |
| Oxyde de zinc | 9 |
| Acide stéarique | 1 |
| Antioxydant (2) | 1,3 |
| CTP (4) | 0,8 |
| Accélérateur (9) | 0,5 |
| Soufre | 2 |

| | |
|---|---|
| (1) caoutchouc naturel (2) 6PPD (4) CTP : cyclohexyl- thio-phthalimide (9) N,N-dicyclohexyl-2-benzothiazyle sulfénamide, DCBS, | |

Les différences de formulation des compositions P'1 et P'2 sont présentées dans le tableau 3 qui suit :

**Tableau 3**

| **Composition** | **P'1** | **P'2** |
|---|---|---|
| Noir de carbone (10) | 53 | 34 |
| Graphite (8) | - | 3,5 |

| | | |
|---|---|---|
| (10) noir de carbone N683 (8) Graphite naturel « TIMREX BNB90 » commercialisé par la société TIMCAL. | | |

Les propriétés de caoutchouterie de ces deux compositions sont mesurées avant cuisson et après cuisson à 150°C pendant 60 minutes, les résultats obtenus sont portés sur le tableau 4.

**Tableau 4**

| **Composition N°** | **P'1** | **P'2** |
|---|---|---|
| Propriétés avant cuisson | | |
| Mooney | 73 | 53 |
| Propriétés après cuisson | | |
| MA10 (MPa) | 9,36 | 9,03 |
| MA100 (MPa) | 5,77 | 5,06 |
| P60° | 14,5 | 13,0 |

On constate que la composition P'2 conforme à l'invention, c'est-à-dire contenant du graphite dans une proportion reliée à la proportion de noir de carbone (comme explicitée plus en détails précédemment dans la description), présente une meilleure processabilité que la composition témoin P'1, des propriétés d'allongement à cuit équivalentes et une baisse significative de l'hystérèse (voir P60°).

Ainsi il apparaît clairement que la composition conforme à l'invention utilisant un grade de noir de carbone différent de ceux présentés à l'essai 1, permet également d'améliorer l'hystérèse par rapport à une composition témoin utilisant une charge renforçante de même nature.

## Revendications

1. Pneumatique comportant au moins une gomme de bordure d'une extrémité de nappe ou d'élément de renforcement, ayant une composition à base d'au moins un élastomère diénique, une charge renforçante, et un système de vulcanisation **caractérisé en ce que** la composition comprend également du graphite, de sorte que :
le taux de charge renforçante est égal à (A-X) pce et le taux de graphite est compris entre X/6 et 2X/3 pce,
- A étant un nombre compris entre 20 et 120
- X étant un nombre compris entre 4 et 48,
- et X et A vérifiant la relation suivante : X< 0.4 * A.

2. Pneumatique selon la revendication 1, dans lequel la composition de la gomme de bordure comprend du graphite dans un taux compris entre 2 et 30 pce.

3. Pneumatique selon l'une quelconque des revendications 1 ou 2, dans lequel la composition de la gomme de bordure comprend du graphite dans un taux compris entre 3 et 20 pce.

4. Pneumatique selon l'une quelconque des revendication précédentes, dans lequel le taux de graphite est égal à X/2.

5. Pneumatique selon l'une quelconque des revendications 1 à 3, dans lequel le taux de graphite est égal à X/6.

6. Pneumatique selon l'une quelconque des revendications 1 à 5, dans lequel l'élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

7. Pneumatique selon l'une quelconque des revendications 1 à 6, dans lequel l'élastomère diénique est un élastomère isoprénique, de préférence un polyisoprène de synthèse ou du caoutchouc naturel

8. Pneumatique selon la revendication 7, dans lequel l'élastomère diénique comprend plus de 40 pce de caoutchouc naturel et/ou de polyisoprène de synthèse.

9. Pneumatique selon l'une quelconque des revendications précédentes, dans lequel le graphite se présente sous une forme lamellaire.

10. Pneumatique selon l'une quelconque des revendications précédentes, dans lequel le graphite est un graphite naturel.

11. Pneumatique selon l'une quelconque des revendications 1 à 9, dans lequel le graphite est un graphite naturel expansable.

12. Pneumatique selon l'une quelconque des revendications 1 à 9, dans lequel le graphite est un graphite expansé.

13. Pneumatique selon l'une quelconque des revendications 1 à 9, dans lequel le graphite est un graphite synthétique.

14. Pneumatique selon l'une quelconque des revendications 1 à 9, dans lequel le graphite comprend un coupage de graphite naturel et/ou de graphite naturel expansable et/ou de graphite expansé et/ou de graphite synthétique.

15. Pneumatique selon l'une quelconque des revendications précédentes, dans lequel la charge renforçante comprend du noir de carbone.

16. Pneumatique selon la revendication 15, dans lequel la charge renforçante comprend majoritairement du noir de carbone.

17. Pneumatique selon la revendication 16, dans lequel la charge renforçante est constituée par du noir de carbone.

18. Pneumatique selon l'une quelconque des revendications 1 à 16, dans lequel la charge renforçante comprend une charge inorganique.

19. Pneumatique selon la revendication 18, dans lequel la charge inorganique est de la silice.

20. Procédé pour préparer une gomme de bordure d'une extrémité de nappe ou d'élément de renforcement d'un pneumatique, ayant une composition à base d'au moins un élastomère diénique, une charge renforçante, et un système de vulcanisation **caractérisé en ce que** la composition comprend également du graphite, de sorte que :
le taux de charge renforçante est égal à (A-X) pce et le taux de graphite est compris entre X/6 et 2X/3 pce,
- A étant un nombre compris entre 20 et 120,
- X étant un nombre compris entre 4 et 48,
- et X et A vérifiant la relation suivante : X< 0.4 * A,
ledit procédé comportant les étapes suivantes :
• incorporer à un élastomère diénique au moins une charge renforçante, en malaxant thermomécaniquement le tout, en une ou plusieurs fois, jusqu'à atteindre une température maximale comprise entre 110°C et 190°C ;
• refroidir l'ensemble à une température inférieure à 100°C ;
• incorporer ensuite le système de vulcanisation ;
• malaxer le tout jusqu'à une température maximale inférieure à 110°C.

## Claims

1. Tyre comprising at least one border rubber for one end of a reinforcing element or ply, having a composition based on at least one diene elastomer, a reinforcing filler and a vulcanisation system, **characterized in that** the composition also includes graphite, in such a way that:
- the reinforcing filler content is equal to (A-X) phr and the graphite content is between X/6 and 2X/3 phr;
- A being a number between 20 and 120;
- X being a number between 4 and 48; and
- X and A satisfying the following relationship: X < 0.4A.

2. Tyre according to Claim 1, in which the composition of the border rubber includes graphite with a content between 2 and 30 phr.

3. Tyre according to either of Claims 1 and 2, in which the composition of the border rubber includes graphite with a content between 3 and 20 phr.

4. Tyre according to any one of the preceding claims, in which the graphite content is equal to X/2.

5. Tyre according to any one of Claims 1 to 3, in which the graphite content is equal to X/6.

6. Tyre according to any one of Claims 1 to 5, in which the diene elastomer is selected from the group formed by polybutadienes, natural rubber, synthetic polyisoprenes, butadiene copolymers, isoprene copolymers and blends of these elastomers.

7. Tyre according to any one of Claims 1 to 6, in which the diene elastomer is an isoprene elastomer, preferably a synthetic polyisoprene or natural rubber.

8. Tyre according to Claim 7, in which the diene elastomer comprises more than 40 phr natural rubber and/or synthetic polyisoprene.

9. Tyre according to any one of the preceding claims, in which the graphite is in lamellar form.

10. Tyre according to any one of the preceding claims, in which the graphite is a natural graphite.

11. Tyre according to any one of Claims 1 to 9, in which the graphite is an expandable natural graphite.

12. Tyre according to any one of Claims 1 to 9, in which the graphite is an expanded graphite.

13. Tyre according to any one of Claims 1 to 9, in which the graphite is a synthetic graphite.

14. Tyre according to any one of Claims 1 to 9, in which the graphite comprises a blend of natural graphite and/or expandable natural graphite and/or expanded graphite and/or synthetic graphite.

15. Tyre according to any one of the preceding claims, in which the reinforcing filler comprises carbon black.

16. Tyre according to Claim 15, in which the reinforcing filler comprises predominantly carbon black.

17. Tyre according to Claim 16, in which the reinforcing black is formed from carbon black.

18. Tyre according to any one of Claims 1 to 16, in which the reinforcing filler comprises an inorganic filler.

19. Tyre according to Claim 18, in which the inorganic filler is silica.

20. Process for producing a border rubber for one end of a reinforcing element or ply of a tyre, having a composition based on at least one diene elastomer, a reinforcing filler and a vulcanisation system, **characterized in that** the composition also includes graphite, in such a way that:
- the reinforcing filler content is equal to (A-X) phr and the graphite content is between X/6 and 2X/3 phr;
- A being a number between 20 and 120;
- X being a number between 4 and 48; and
- X and A satisfying the following relationship: X < 0.4A, said process comprising the following steps:
• of incorporating into a diene elastomer at least one reinforcing filler, by thermomechanically mixing all the ingredients, one or more times, until a maximum temperature of between 110°C and 190°C is reached;
• of cooling the mixture down to a temperature below 100°C;
• of then incorporating the crosslinking system; and
• of mixing everything until a maximum temperature below 110°C is reached.

## Patentansprüche

1. Reifen, der mindestens eine Gummieinfassung eines Endes einer Lage oder eines Verstärkungselements aufweist, die eine Zusammensetzung auf der Basis mindestens eines Dienelastomers, eines verstärkenden Füllstoffes und eines Vulkanisationssystems aufweist, **dadurch gekennzeichnet, dass** die Zusammensetzung außerdem Graphit umfasst, derart, dass:
der Anteil des verstärkenden Füllstoffes gleich (A-X) pce (Gewichtsanteile auf 100 Elastomeranteile) ist und der Anteil von Graphit zwischen X/6 und 2X/3 pce beträgt,
- wobei A eine Zahl zwischen 20 und 120 ist,
- wobei X eine Zahl zwischen 4 und 48 ist,
- und X und A der folgenden Beziehung genügen: X < 0,4 * A.

2. Reifen nach Anspruch 1, wobei die Zusammensetzung der Gummieinfassung Graphit in einem Anteil zwischen 2 und 30 pce enthält.

3. Reifen nach einem der Ansprüche 1 oder 2, wobei die Zusammensetzung der Gummieinfassung Graphit in einem Anteil zwischen 3 und 20 pce enthält.

4. Reifen nach einem der vorhergehenden Ansprüche, wobei der Anteil von Graphit gleich X/2 ist.

5. Reifen nach einem der Ansprüche 1 bis 3, wobei der Anteil von Graphit gleich X/6 ist.

6. Reifen nach einem der Ansprüche 1 bis 5, wobei das Dienelastomer aus der Gruppe ausgewählt ist, die aus Polybutadienen, Naturkautschuk, Synthesepolyisoprenen, Butadiencopolymeren, Isoprencopolymeren und Gemischen dieser Elastomere besteht.

7. Reifen nach einem der Ansprüche 1 bis 6, wobei das Dienelastomer ein Isoprenelastomer, vorzugsweise ein Synthesepolyisopren, oder Naturkautschuk ist.

8. Reifen nach Anspruch 7, wobei das Dienelastomer mehr als 40 pce Naturkautschuk und/oder Synthesepolyisopren umfasst.

9. Reifen nach einem der vorhergehenden Ansprüche, wobei das Graphit in einer lamellaren Form vorliegt.

10. Reifen nach einem der vorhergehenden Ansprüche, wobei das Graphit ein natürliches Graphit ist.

11. Reifen nach einem der Ansprüche 1 bis 9, wobei das Graphit ein expandierbares natürliches Graphit ist.

12. Reifen nach einem der Ansprüche 1 bis 9, wobei das Graphit ein expandiertes Graphit ist.

13. Reifen nach einem der Ansprüche 1 bis 9, wobei das Graphit ein synthetisches Graphit ist.

14. Reifen nach einem der Ansprüche 1 bis 9, wobei das Graphit ein Stoffgemisch aus natürlichem Graphit und/oder expandierbarem natürlichem Graphit und/oder expandiertem Graphit und/oder synthetischem Graphit umfasst.

15. Reifen nach einem der vorhergehenden Ansprüche, wobei der verstärkende Füllstoff Ruß umfasst.

16. Reifen nach Anspruch 15, wobei der verstärkende Füllstoff überwiegend Ruß umfasst.

17. Reifen nach Anspruch 16, wobei der verstärkende Füllstoff aus Ruß besteht.

18. Reifen nach einem der Ansprüche 1 bis 16, wobei der verstärkende Füllstoff einen anorganischen Füllstoff umfasst.

19. Reifen nach Anspruch 18, wobei der anorganische Füllstoff Siliciumdioxid ist.

20. Verfahren zum Herstellen einer Gummieinfassung eines Endes einer Lage oder eines Verstärkungselements eines Reifens, die eine Zusammensetzung auf der Basis mindestens eines Dienelastomers, eines verstärkenden Füllstoffes und eines Vulkanisationssystems aufweist, **dadurch gekennzeichnet, dass** die Zusammensetzung außerdem Graphit umfasst, derart, dass:
der Anteil des verstärkenden Füllstoffes gleich (A-X) pce (Gewichtsanteile auf 100 Elastomeranteile) ist und der Anteil von Graphit zwischen X/6 und 2X/3 pce beträgt,
- wobei A eine Zahl zwischen 20 und 120 ist,
- wobei X eine Zahl zwischen 4 und 48 ist,
- und X und A der folgenden Beziehung genügen: X < 0,4 * A,
wobei das Verfahren die folgenden Schritte aufweist:
• Einarbeiten mindestens eines verstärkenden Füllstoffes in das Dienelastomer, indem das Ganze auf einmal oder mehrere Male thermomechanisch gemischt wird, bis eine maximale Temperatur zwischen 110 °C und 190 °C erreicht wird;
• Abkühlen der Gesamtheit auf eine Temperatur unter 100 °C;
• anschließend Einarbeiten des Vulkanisationssystems;
• Durchmischen des Ganzen bis zu einer maximalen Temperatur unter 110 °C.
